# EUROPEAN PATENT APPLICATION

(11) **EP 2 324 983 A1**
(43) Date of publication of application: **25.05.2011**
(21) Application number: 10191517.1
(22) Date of filing: 17.11.2010
(51) Int. Cl.: B29C 45/42, B29C 45/44

(54) **Method of ejecting molded article, apparatus of the same, and molding apparatus**

(30) Priority: 18.11.2009 JP 2009262590; 19.01.2010 JP 2010008687
(71) Applicant: Honda Motor Co., Ltd., Tokyo 107-8556 (JP)
(72) Inventor: Futakuchi, Makoto, Tochigi 321-3395 (JP); Tomomitsu, Hiroyuki, Tochigi 321-3395 (JP); Sato, Takaaki, Tochigi 321-3395 (JP); Hosoi, Shun, Tochigi 321-3395 (JP); Suzuki, Takashi, Tochigi 321-3395 (JP); Yamahiro, Takuji, Tochigi 321-3395 (JP); Ogawara, Yutaka, Tochigi 321-3395 (JP); Kato, Takashi, Tochigi 321-3395 (JP); Higashi, Shunsuke, Tochigi 321-3395 (JP)
(74) Representative: Beder, Jens

(57) **Abstract**

A molding apparatus for releasing a molded article having undercut portions from a die is provided. A molding apparatus 1 for releasing a molded article 7 having undercut portions 7a and 7b from dies 2, 3, and others, includes: inclined cores 6a and 6b for forming the undercut portions 7a and 7b; pushing pins 11 and 12 to be projected from the inclined core 6a and 6b; sliding plates 10a and 10b provided on the lower die 3, base end portions 11a and 12a of the pushing pins 11 and 12 being configured to slide on the lower die; and elastic members 13 and 14 for pushing the pushing pins 11 and 12 against the sliding plates 10a and 10b; wherein, when the inclined cores 6a and 6b are moved in a direction in which the inclined cores move away from the molded article 7, the pushing pins 11 and 12 are projected from the inclined cores 6a and 6b by the amount of the movement and push the molded article 7 so as to form a gap G between the molded article 7 and the inclined cores 6a and 6b.

## Description

### BACKGROUND OF THE INVENTION

### Field of the Invention

The present invention relates to a method of releasing a molded article having an undercut portion from a die by releasing the molded article from the die and relates to an apparatus and a molding apparatus of the same.

### Description of the Related Art

For example, as described in Japanese Utility Model Laid-Open No. H2-80424, a method in which a molded article is lifted up by so-called suckers has been known as a method of lifting up undercut portions of a molded article and releasing and ejecting the molded article from a die. As described in Japanese Patent Laid-Open No. 2007-69507, there has been known a method wherein a molded article is supported by part of a die, and, at the same time, an inner end edge of a flange part of the molded article is lifted up and pushed to the outside with respect to an outer end edge of a sliding die so as to release the molded article from the die.

However, the invention described in Japanese Utility Model Laid-Open No. H2-80424 wherein suckers are used has a problem in that it is difficult to realize a precise lift-up amount due to the flexural deformation of the suckers, which are elastic bodies. Meanwhile, in the invention described in Japanese Patent Laid-Open No. 2007-69507, the die needs to have a mechanism for lifting up the molded article therein. Therefore, there are problems in that the structure of the die becomes complex, the molded article ejecting apparatus has to be synchronized with the movement of the die, and the means therefor also becomes complex.

### SUMMARY OF THE INVENTION

The present invention has been accomplished in view of such problems residing in conventional techniques, and it is an object of the present invention to provide a molded article ejecting method of ejecting a molded article having undercut portions from a die by releasing the molded article from the die with a simple configuration and to provide an apparatus and a molding apparatus of the same.

In order to solve the above described problems, according to a first aspect of the present invention, a method of ejecting a molded article having an undercut portion from a die by releasing the molded article from the die includes: a gap forming step of forming a gap between the die and the undercut portion; a nail inserting step of inserting a nail of an ejector into the gap formed in the gap forming step; and a die-releasing step of pulling the nail inserted into the gap in the nail inserting step in a direction in which the undercut portion moves away from the die so as to release the molded article from the die.

The gap can be formed by moving the die in the direction in which the die moves away from the molded article.

Furthermore, the gap can be formed by a pushing pin projected from the interior of the die at the same time as the movement of the die in the direction in which the die moves away from the molded article.

According to a second aspect of the present invention, a molding apparatus for releasing a molded article having an undercut portion from a die includes: an inclined core for forming the undercut portion; a pushing pin to be projected from the inclined core; a sliding plate provided on a main body of the die, a base end portion of the pushing pin being configured to slide on the main body; and an elastic member for pushing the pushing pin against the sliding plate; wherein, when the inclined core is moved in a direction in which the inclined core moves away from the molded article, the pushing pin is projected from the inclined core by the amount of the movement and pushes the molded article so as to form a gap between the molded article and the inclined core.

According to a third aspect of the present invention, an apparatus for lifting up an undercut portion of a molded article and ejecting the molded article from a die, the apparatus includes: expanding means for lifting up the undercut portion of the molded article; moving means for moving the molded article having the undercut portion lifted up by the expanding means; a direct pushing rod for pushing the expanding means, which is in the state that the expanding means is lifting up the undercut portion of the molded article, in a die-releasing direction the same as a direction of the movement of the moving means together with the moving means; and a suction means for sucking the molded article pushed by the direct-pushing rod and released from the die.

The direct-pushing rod can operate integrally with part of the die. Furthermore, the direct-pushing rod can push the expanding means, which is in the state that the expanding means is lifting up the undercut portion of the molded article, in the die-releasing direction by a force stronger than a force of the movement of the moving means.

According to a fourth aspect of the present invention, a molded article ejecting method includes lifting up an undercut portion of a molded article and ejecting the molded article from a die, wherein, after the undercut portion of the molded article is lifted up, part of the die supports part of the molded article when the molded article moves in a die-releasing direction.

According to the first aspect of the present invention, first, the gap, having the extent that the nail can be inserted, is formed between the die and the molded article, and the nail of the ejector is then inserted into the gap so as to lift up the undercut portion and release the molded article from the die; therefore, the amount of lifting up of the undercut portion can be reduced to a minimum. Moreover, since the amount of lifting up of the undercut portion can be reduced to the minimum, the molded article can be quickly ejected from the die without adversely affecting the quality of the molded article.

When the die is moved in the direction in which the die moves away from the molded article, the gap is formed between the die and the molded article; therefore, the nail of the ejector can be inserted by a simple configuration.

Moreover, when the certain gap is formed between the die and the molded article as a result of the projection of the pushing pin from the interior of the die, the nail of the ejector can be inserted therein even in the case of a molded article that has weak rigidity and adheres to the inclined core.

According to the second aspect of the present invention, the certain gap can be reliably formed between the molded article and the inclined core by the movement of the inclined core combined with the projection of the pushing pin from the inclined core.

According to the third aspect of the present invention, the expanding means for lifting up the undercut portion of the molded article is provided outside of the die as an element separated from the die; therefore, the structure of the die does not become complex, and a molded article having an undercut portion can be reliably released and ejected from the die.

When the direct-pushing rod for pushing the expanding means in the die-releasing direction is provided integrally with part of the die, synchronization of the movement of the expanding means, the moving means and the movement of the die is made easy, and the molded article having the undercut portion can be reliably released and ejected from the die.

When the direct-pushing rod pushes the expanding means, which is in the state that the expanding means is lifting up the undercut portion of the molded article, in the die-releasing direction by a force stronger than the force of the movement of the moving means, the movement of the expanding means, the moving means and the movement of the die can be easily synchronized, and the molded article having the undercut portion can be reliably released and ejected from the die.

According to the fourth aspect of the present invention, the molded article having the undercut portion can be reliably released and ejected from the die.

### BRIEF DESCRIPTION OF THE DRAWINGS

FIG. 1 is an overall explanatory drawing of a molding apparatus according to the present invention;
FIGS. 2A and 2B are explanatory drawings of the molding apparatus, wherein FIG. 2A shows a state before pushing out the molded article after die opening, and FIG. 2B shows a state after the molded article is pushed out;
FIGS. 3A to 3F are explanatory drawings of the workings of a method of ejecting the molded article and the molding apparatus according to the present invention, wherein FIG. 3A shows a molded state, FIG. 3B shows a state in which an upper die and outer slide cores are opened, FIG. 3C shows a state in which pushing pins are pushed out, FIG. 3D shows a state in which the nails of an ejector are inserted, FIG. 3E shows a lift-up state achieved by the nails, and FIG. 3F shows a molded-article-ejected state achieved by the ejector;
FIGS. 4A and 4B are explanatory drawings of a molded article, wherein FIG. 4A is a plan view, and FIG. 4B is a back view;
FIGS. 5A and 5B are explanatory drawings of dies, wherein FIG. 5A is a cross sectional view, and FIG. 5B is a side view;
FIGS. 6A and 6B are explanatory drawings of a molded article ejecting apparatus according to the present invention, wherein FIG. 6A is a front view, and FIG. 6B is a side view;
FIG. 7 is an explanatory drawing of the working of the molded article ejecting apparatus according to the present invention;
FIG. 8 is an explanatory drawing of the working of the molded article ejecting apparatus according to the present invention;
FIG. 9 is an explanatory drawing of the working of the molded article ejecting apparatus according to the present invention;
FIG. 10 is an explanatory drawing of the working of the molded article ejecting apparatus according to the present invention;
FIG. 11 is an explanatory drawing of the working of the molded article ejecting apparatus according to the present invention;
FIG. 12 is an explanatory drawing of the working of the molded article ejecting apparatus according to the present invention;
FIG. 13 is an explanatory drawing of the working of the molded article ejecting apparatus according to the present invention; and
FIG. 14 is an explanatory drawing of the working of the molded article ejecting apparatus according to the present invention.

### DETAILED DESCRIPTION OF THE PREFERRED EMBODIMENTS

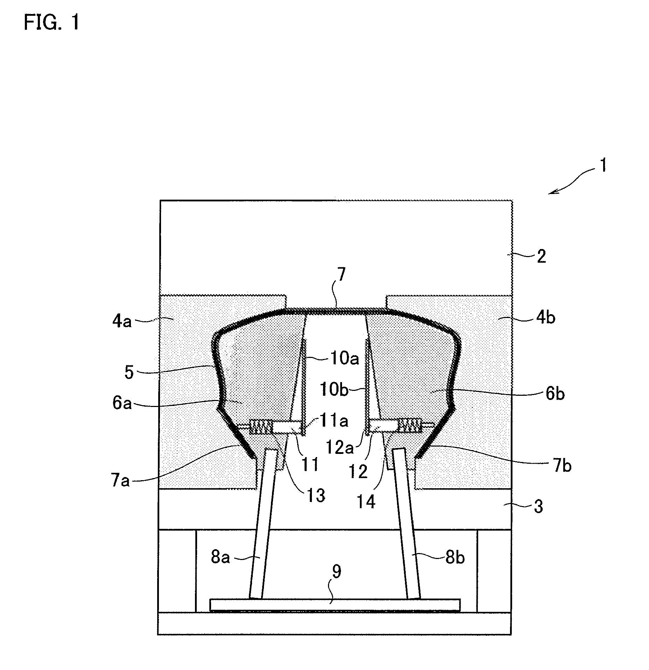

Hereinafter, an embodiment of the present invention will be explained with reference to appended drawings. As shown in FIG. 1, a molding apparatus 1 according to the present invention includes: an upper die 2, which moves up and down; a lower die 3, which is opposed to the upper die 2; left and right outer slide cores 4a and 4b, which slide transversely along the lower die 3; and left and right inclined cores 6a and 6b, which form a cavity 5 together with the outer slide cores 4a and 4b.

Undercut portions 7a and 7b are molded at left and right end portions of the molded article 7 by the left and right inclined cores 6a and 6b and others. Such a molded article 7 corresponds to, for example, a front fender of a motorcycle.

The left and right inclined cores 6a and 6b are connected to one end of rods 8a and 8b, respectively. The other end of the rods 8a and 8b are coupled to a pushing plate 9 disposed below the lower die 3. Thus, when the pushing plate 9 is moved up and down by a drive means (not shown), the inclined cores 6a and 6b are moved up and down by means of the rods 8a and 8b along the lower die 3.

Then, after molding, along with the upward movement of the pushing plate 9 coupled to the inclined rods 8a and 8b, the left inclined core 6a and the right inclined core 6b are moved up along the lower die 3 and, at the same time, moved closer to each other. As a result, a gap is formed between the molded article 7 and the inclined cores 6a and 6b.

Furthermore, the left and right inclined cores 6a and 6b are respectively provided with pushing pins 11 and 12, which are moved up and down while base end portions 11a and 12a thereof slide on sliding plates 10a and 10b provided in the lower die 3. The pushing pins 11 and 12 are always pushed against the sliding plates 10a and 10b, respectively, by elastic members 13 and 14 compressed and attached respectively in the inclined cores 6a and 6b.

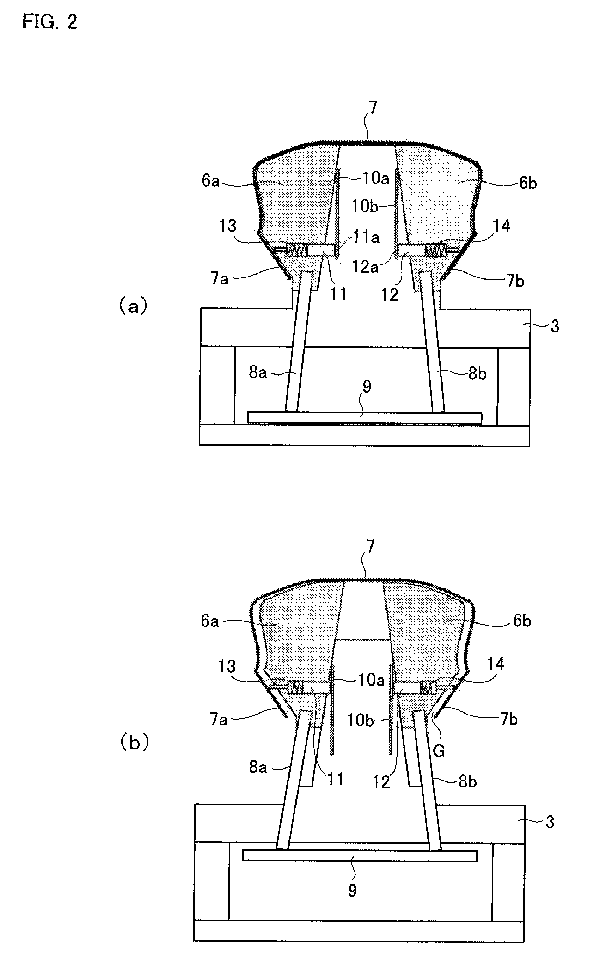

When the pushing plate 9 is at a lowering-end, the entirety of the pushing pins 11 and 12 is positioned in the inclined cores 6a and 6b as shown in FIG. 2A; and, when the pushing plate 9 is at a lifting-end, the pushing pins 11 and 12 are relatively projected from the inclined cores 6a and 6b as shown in FIG. 2B since the inclined cores 6a and 6b are moved in the direction in which they move closer to each other. The pushing pins 11 and 12 do not move in the projection direction since the pins are always pushed against the sliding plates 10a and 10b by the elastic members 13 and 14.

After molding, the pushing plate 9 is moved up, the left inclined core 6a and the right inclined core 6b are moved in the direction in which they move closer to each other, and the pushing pins 11 and 12 are relatively projected from the inclined cores 6a and 6b; as a result, the pushing pins 11 and 12 push the undercut portions 7a and 7b of the molded article 7; therefore, the undercut portions 7a and 7b are released from the die, and a certain gap G is reliably formed between the molded article 7 and the inclined cores 6a and 6b.

Such pushing pins 11 and 12 are provided so as to prepare for the case in which, when the rigidity of the molded article 7 is weak, the molded article 7 adheres on to the inclined cores 6a and 6b, and a gap is not readily formed between the molded article 7 and the inclined cores 6a and 6b and the gap can be formed only by moving the inclined cores 6a and 6b. As a result, the certain gap G can be ensured between the molded article 7 and the inclined cores 6a and 6b after molding.

A method of ejecting a molded article according to the present invention using the thus-configured molding apparatus according to the present invention will be explained by setting out the steps of the procedure from molding of the molded article 7 to ejection of the molded article 7.

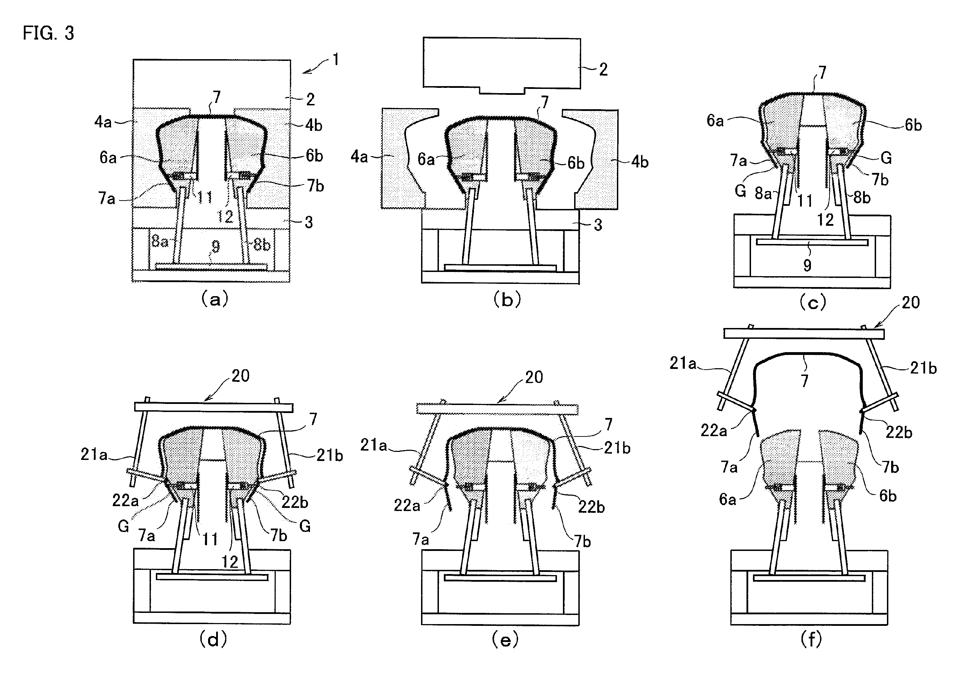

First, as shown in FIG. 3A, the left and right inclined cores 6a and 6b, the left and right outer slide cores 4a and 4b, the upper die 2, and the lower die 3 are closed, and the molded article 7 having the undercut portions 7a and 7b is molded. At this point, the pushing pins 11 and 12 are positioned in the inclined cores 6a and 6b.

Then, as shown in FIG. 3B, after molding, the upper die 2 is opened, and the left and right outer slide cores 4a and 4b are subsequently opened, thereby achieving a die-opened state.

Then, as shown in FIG. 3C, the pushing plate 9 is moved up to the lifting-end. As a result, the left inclined core 6a and the right inclined core 6b are moved in the direction in which they move closer to each other, and the pushing pins 11 and 12 are relatively projected from the inclined cores 6a and 6b.

The certain gap G (for example, about 8 mm) is formed between the molded article 7 and the inclined cores 6a and 6b by the movement of the left and right inclined cores 6a and 6b in the direction in which they move closer to each other and by the projection of the pushing pins 11 and 12 (gap forming step).

Next, as shown in FIG. 3D, an ejector 20 is moved down, and nails 22a and 22b attached to left and right arms 21a and 21b of the ejector 20 are inserted into the gap G in the vicinities of the undercut portions 7a and 7b formed between the molded article 7 and the inclined cores 6a and 6b (nail inserting step).

Then, as shown in FIG. 3E, the left and right arms 21a and 21b of the ejector 20 are operated so as to pull and lift up the undercut portions 7a and 7b by the nails 22a and 22b (die releasing step).

Then, as shown in FIG. 3F, the ejector 20 holds the molded article 7 and moves up in the state in which the undercut portions 7a and 7b are lifted up by the nails 22a and 22b. As a result, the molded article 7 is completely released from the die and ejected from the molding apparatus 1. Thus, the operation of ejecting the molded article 7 is completed.

In the embodiment of the present invention, the case in which the dies 2, 3, and others are installed so that the die-releasing direction of the upper die 2 is the vertical direction has been explained; however, the dies 2, 3, and others may be installed so that the dies 2, 3, and others and the ejector 20 are rotated by 90 degrees and the die-releasing direction of the upper die 2 becomes the horizontal direction.

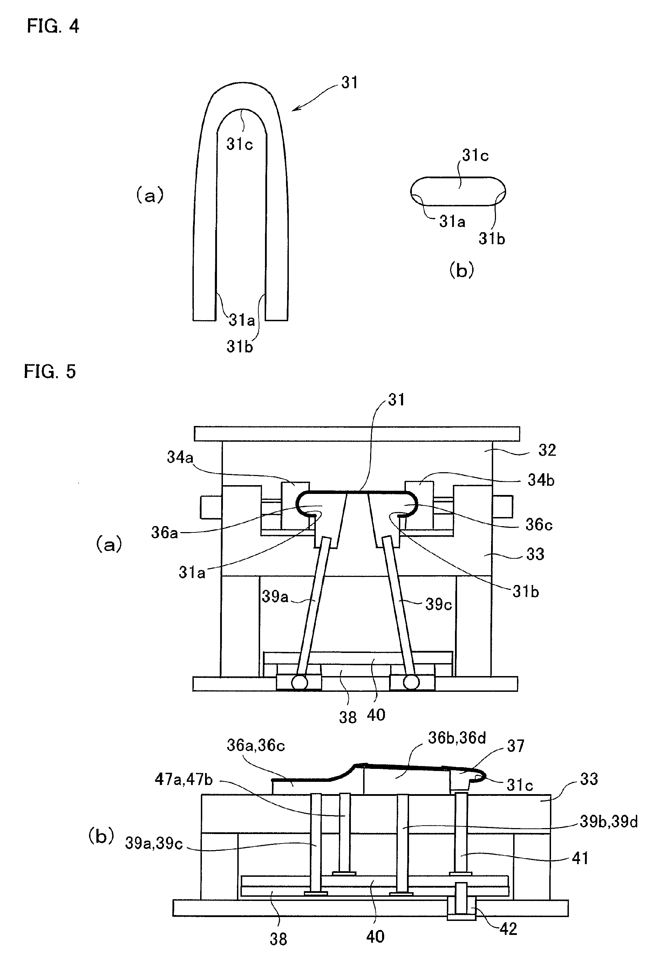

As shown in FIGS. 4A and 4B, a molded article 31 to be released and ejected from the dies by a molded article ejecting apparatus according to the present invention is, for example, a rear cowl of a motorcycle and has left and right undercut portions 31a and 31b and an undercut portion 31c of a tail part.

As shown in FIGS. 5A and 5B, the dies for forming such a molded article 31 includes: an upper die 32; a lower die 33; left and right outer sliding cores 34a and 34b, which slide transversely; left and right inclined cores 36a, 36b, 36c, and 36d for forming the left and right undercut portions 31a and 31b, wherein the inclined cores in the left or right side are divided into two inclined cores 36a and 36b or 36c and 36d; and a direct-pushing core 37 for forming the undercut portion 31c of the tail part. In FIG. 5B, the upper die 32 is omitted.

The inclined cores 36a, 36b, 36c, and 36d are moved up and down by rods 39a, 39b, 39c, and 39d coupled to a first pushing plate 38 disposed below the lower die 33. The left inclined cores 36a and 36b and the right inclined cores 36c and 36d are moved away from or moved closer to each other in a transverse direction by a drive means (not shown).

Left and right direct-pushing rods 47a and 47b, which will be described later, are coupled to a second pushing plate 40 disposed between the lower die 33 and the first pushing plate 38. Furthermore, a tail-part direct-pushing rod 41, which moves the direct-pushing core 37 up and down, is coupled to the second pushing plate 40. The first pushing plate 38 and the second pushing plate 40 are moved up and down by a two level pushing hydraulic cylinder 42, wherein the stroke of the second pushing plate 40 is set to be longer than that of the first pushing plate 38.

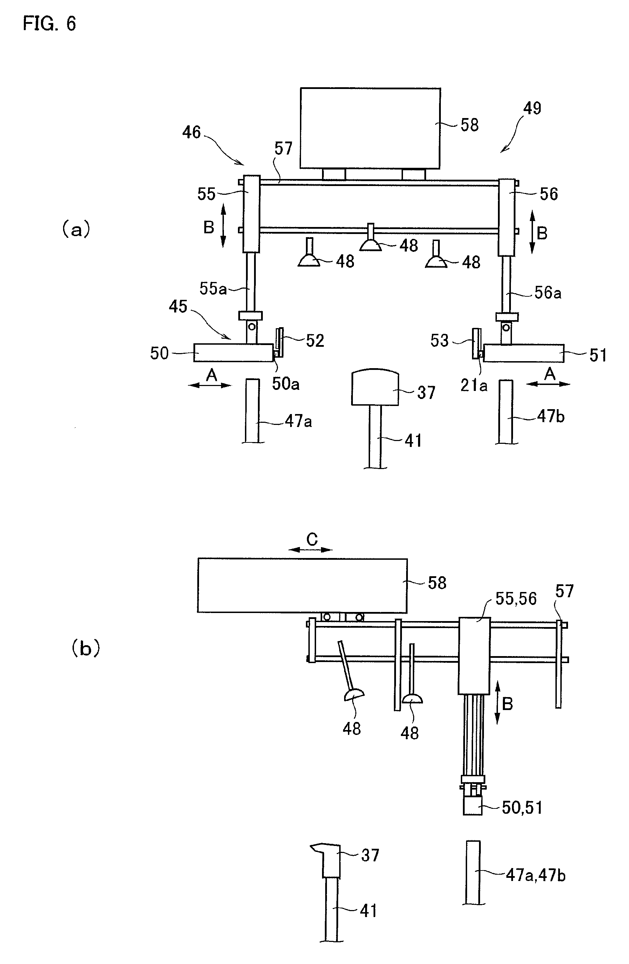

As shown in FIGS. 6A and 6B, the molded article ejecting apparatus according to the present invention for releasing and ejecting the molded article 31 from the dies after forming includes: expanding means 45, which lifts up the undercut portions 31a and 31b of the molded article 31 supported by the left and right inclined cores 36a, 36b, 36c, and 36d; moving means 46, which moves the molded article 31 of which undercut portions 31a and 31b are lifted up by the expanding means 45; the left and right direct-pushing rods 47a and 47b, which push the expanding means 45, which is in the state that the expanding means is lifting up the undercut portions 31a and 31b of the molded article 31, together with the moving means 46 in a die-releasing direction the same as the direction of the movement of the moving means 46; and a suction means 48, which sucks the molded article 31 pushed by the left and right direct-pushing rods 47a and 47b and released from the die. The expanding means 45, the moving means 46, and the suction means 48 constitute the ejecting means 49.

The expanding means 45 includes: left and right electrically-driven cylinders 50 and 51, which are moved backwards and forwards in the transverse direction of the molded article 31 (direction of arrow A); and lifting-up members 52 and 53 attached to the distal ends of the cylinder rods 50a and 51a, respectively. The undercut portions 31a and 31b can be lifted up by moving the left and right electrically-driven cylinders 50 and 51 forwards, hooking the edge parts of the undercut portions 31a and 31b of the molded article 31 on the lifting-up members 52 and 53 from inside, and moving the left and right electrically-driven cylinders 50 and 51 backwards.

The moving means 46 includes: left and right air cylinders 55 and 56, which are moved backwards and forwards in a vertical direction (direction of arrow B) with respect to the molded article 31 after forming; a supporting member 57 supporting the left and right air cylinders 55 and 56; and a drive means 58, which moves the left and right air cylinders 55 and 56 supported by the supporting member 57 in the direction of the arrow C. The left electrically-driven cylinder 50 is attached to a distal end of a cylinder rod 55a of the left air cylinder 55 via an attachment bracket, and the right electrically-driven cylinder 51 is attached to a distal end of a cylinder rod 56a of the right air cylinder 56 via an attachment bracket.

When the second pushing plate 40 is moved up by driving the two-level-pushing hydraulic cylinder 42, the direct-pushing rods 47a and 47b push the electrically-driven cylinders 50 and 51, which are in the state that the cylinders are lifting up the undercut portions 31a and 31b of the molded article 31, together with the air cylinders 55 and 56 of the moving means 46 in the die-releasing direction (direction of arrow B) the same as the direction of the movement of the air cylinders 55 and 56. In this process, this retraction movement of the direct-pushing rods 47a and 47b pushes the electrically-driven cylinders 50 and 51, which are in the state that the cylinders are lifting up the undercut portions 31a and 31b of the molded article 31, in the die-releasing direction by a force stronger than that of the air cylinders 55 and 56, which are open to the atmospheric pressure.

In this manner, the left and right direct-pushing rods 47a and 47b operated integrally with the direct-pushing core 37, which is part of the die, function as a synchronization means of the die and the ejecting means 49 by the upward and downward movement of the second pushing plate 40.

Three units of the suction means 48 are provided in total so as to suck the tail part and respective locations on the left and right of the molded article 31. When the second pushing plate 40 is moved up by driving the two-level-pushing hydraulic cylinder 42, both the rod 41 and the direct-pushing rods 47a and 47b coupled to the second pushing plate 40 are moved up, and the direct-pushing core 37 and the expanding means 45 which is in the state that the means is lifting up the undercut portions 31a and 31b are pushed up. Then, the molded article 31 abuts and is sucked by the suction means 48.

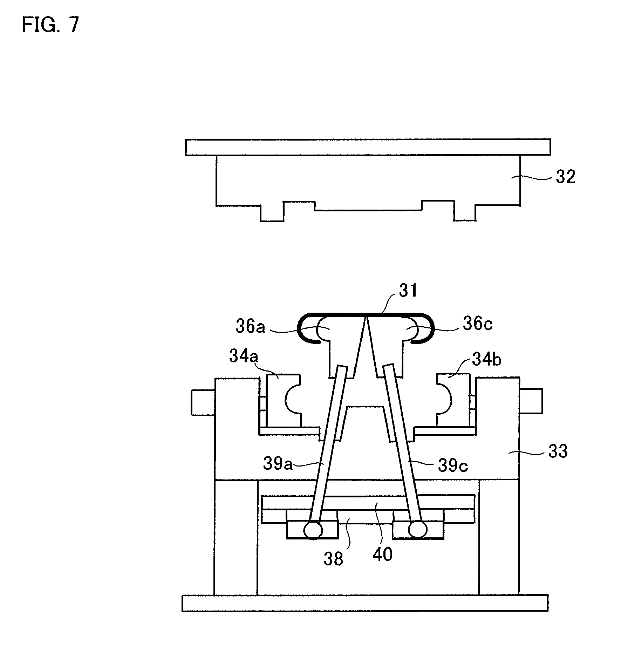

The operation of the thus-constituted molded article ejecting apparatus according to the present invention and the molded article ejecting method according to the present invention will be explained. First, as shown in FIG. 7, when the upper die 32 is moved up and die-opening is completed after forming, the left and right outer sliding cores 34a and 34b are moved backwards, then the left and right inclined cores 36a, 36b, 36c, and 36d are moved closer to each other and then moved up by driving the two-level-pushing hydraulic cylinder 42.

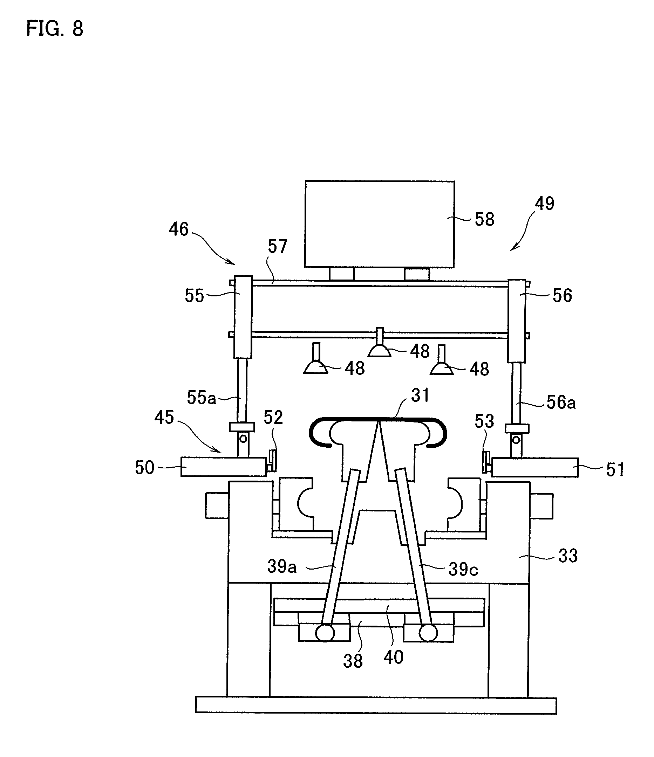

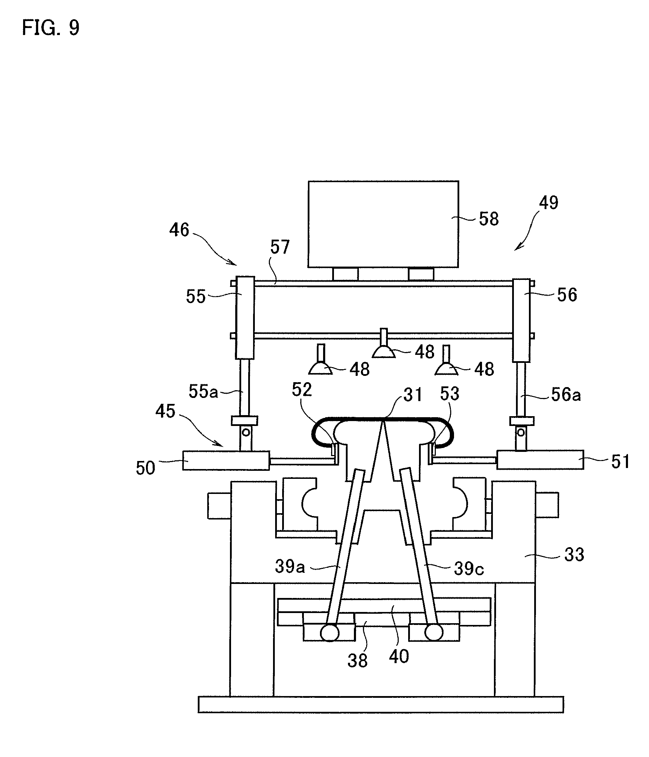

Then, as shown in FIG. 8, the ejecting means 49 including the expanding means 45, the moving means 46, and the suction means 48 is moved to a predetermined position. At this point, the left and right air cylinders 55 and 56 are in a forward state. Then, as shown in FIG. 9, after the left and right electrically-driven cylinders 50 and 51 are moved forward, the ejecting means 49 is moved up a little.

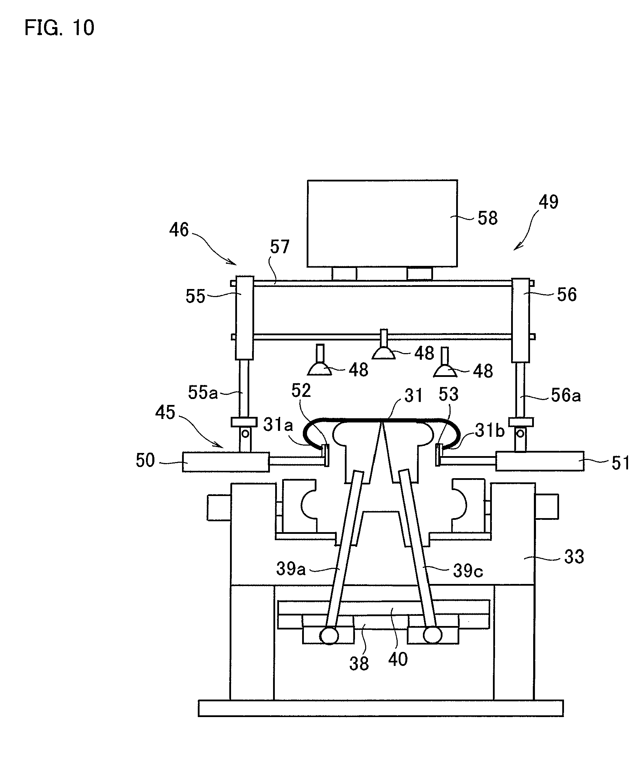

Then, as shown in FIG. 10, the left and right electrically-driven cylinders 50 and 51 are moved backward to predetermined positions, thereby hooking the edge parts of the undercut portions 31a and 31b of the molded article 31 on the left and right lifting-up members 52 and 53 from inside; and the left and right electrically-driven cylinders 50 and 51 are further moved backwards, thereby lifting up the undercut portions 31a and 31b.

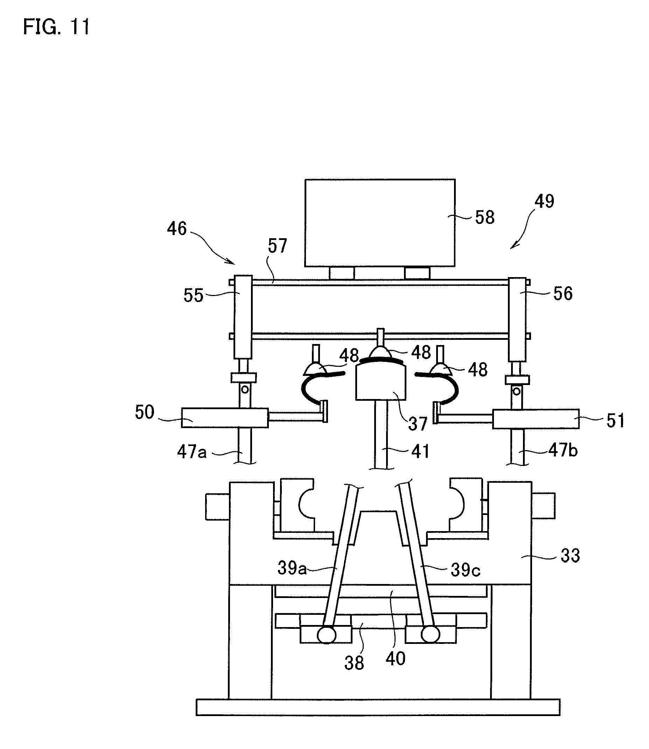

Then, as shown in FIG. 11, when the second pushing plate 40 is moved up by driving the two-level-pushing hydraulic cylinder 42, the left and right direct-pushing rods 47a and 47b and the tail-part direct-pushing rod 41 are moved up. The left and right direct-pushing rods 47a and 47b push up the left and right electrically-driven cylinders 50 and 51, which are in the state that the cylinders are lifting up the undercut portions 31a and 31b, against the left and right air cylinders 55 and 56, which are open to the atmosphere. At the same time, the tail-part direct-pushing rod 41 pushes up the tail part by means of the direct-pushing core 37.

Then, the molded article 31 abuts and is sucked by the three units of the suction means 48, which are disposed so as to suck the tail part and the left and right sides of the molded article 31.

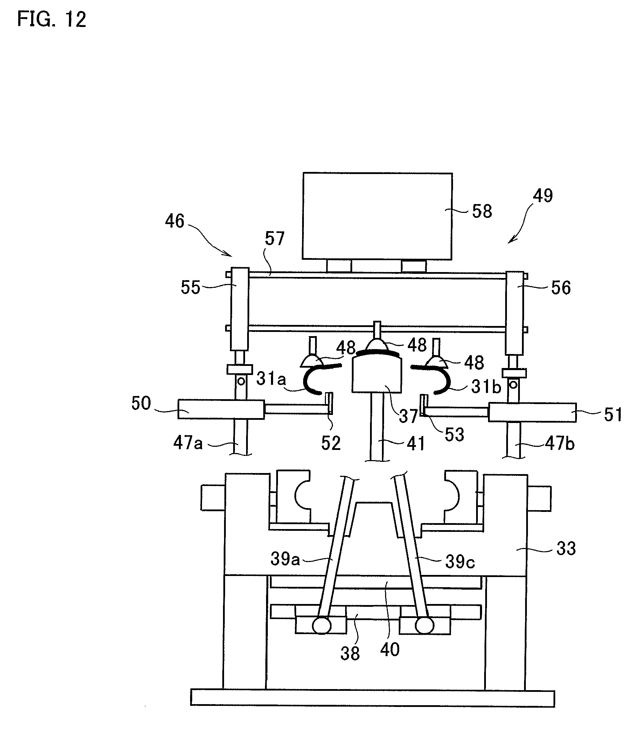

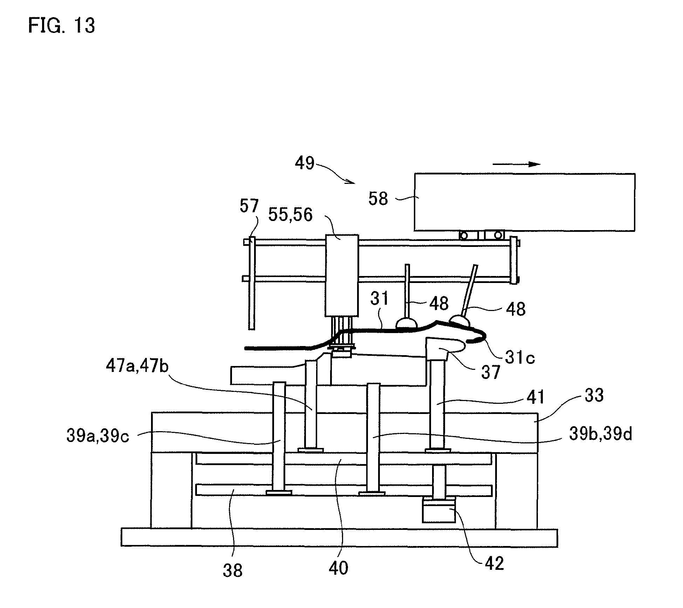

Then, as shown in FIG. 12, the left and right electrically-driven cylinders 50 and 51 are moved forward to predetermined positions, thereby releasing the lift-up state of the undercut portions 31a and 31b lifted up by the left and right lifting-up members 52 and 53. Furthermore, as shown in FIG. 13, the ejecting means 49 is moved in the direction of the arrow, thereby releasing the undercut portion 31c of the tail part from the direct-pushing core 37 and completely releasing and ejecting the molded article 31 from the die.

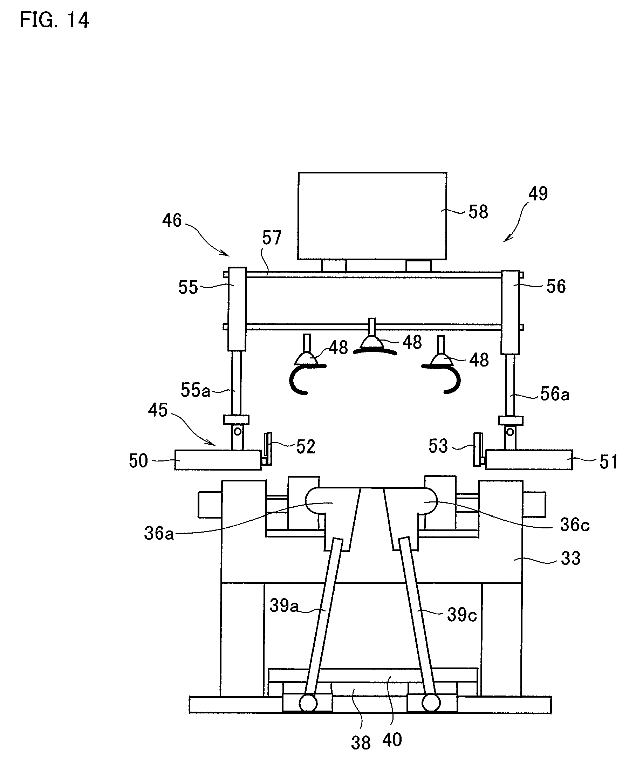

Then, as shown in FIG. 14, the left and right electrically-driven cylinders 50 and 51 are moved backwards, the left and right air cylinders 55 and 56 are moved forwards, and the ejecting means 49 is moved to a predetermined position. Thus, the operation of releasing and ejecting the molded article 31 having the undercut portions 31a, 31b, and 31c from the die is finished. The dies 32, 33, and others return to the state shown in FIG. 5A.

In the embodiment of the present invention, the case in which the dies 32, 33, and others are installed so that the die-releasing direction is the vertical direction (direction of arrow B) is explained; however, the dies 32, 33, and others may be installed so that the die-releasing direction becomes the horizontal direction by rotating the dies 32, 33, and others and the ejecting means 49 by 90 degrees.

According to the present invention, first, a gap having the extent that the nails can be inserted is formed between the die and the molded article, and the nails of the ejector are then inserted into the gap so as to lift up the undercut portions and release the molded article from the die; therefore, the method of quickly ejecting the molded article from the die, capable of reducing the lift-up amount to a minimum without adversely affecting the quality of the molded article, can be provided.

According to the present invention, the means for lifting up the undercut portion of the molded article is provided outside of the die as an element separated from the die; therefore, the molded article ejecting apparatus capable of reliably releasing and ejecting the molded article, which has the undercut portions, from the die without causing the structure of the die to become complex, and the method of the same, can be provided.

## Claims

1. A method of ejecting a molded article (7) having an undercut portion (7a, 7b) from a die by releasing the molded article (7) from the die, the method comprising:
a gap forming step of forming a gap (G) between the die and the undercut portion (7a, 7b);
a nail inserting step of inserting a nail (22a, 22b) of an ejector (20) into the gap (G) formed in the gap forming step; and
a die-releasing step of pulling the nail (22a, 22b) inserted into the gap (G) in the nail inserting step in a direction in which the undercut portion (7a, 7b) moves away from the die so as to release the molded article (7) from the die.

2. The method of ejecting the molded article according to claim 1, wherein
the gap (G) is formed by moving the die in the direction in which the die moves away from the molded article (7).

3. The method of ejecting the molded article according to claim 1, wherein
the gap (G) is formed by a pushing pin (11, 12) projected from the interior of the die at the same time as the movement of the die in the direction in which the die moves away from the molded article (7).

4. A molding apparatus for releasing a molded article having an undercut portion from a die, the apparatus comprising:
an inclined core (6a, 6b) for forming the undercut portion (7a, 7b);
a pushing pin (11, 12) to be projected from the inclined core (6a, 6b);
a sliding plate (10a, 10b) provided on a main body of the die, a base end portion of the pushing pin (11, 12) being configured to slide on the main body; and
an elastic member (13, 14) for pushing the pushing pin (11, 12) against the sliding plate (10a, 10b); wherein,
when the inclined core (6a, 6b) is moved in a direction in which the inclined core (6a, 6b) moves away from the molded article (7), the pushing pin (11, 12) is projected from the inclined core (6a, 6b) by the amount of the movement and pushes the molded article (7) so as to form a gap (G) between the molded article (7) and the inclined core (6a, 6b).

5. A molded article ejecting apparatus for lifting up an undercut portion (7a, 7b) of a molded article (31) and ejecting the molded article (31) from a die, the apparatus comprising:
expanding means (45) for lifting up the undercut portion (31a, 31b) of the molded article (7);
moving means (46) for moving the molded article (31) having the undercut portion lifted up by the expanding means;
a direct-pushing rod (47a, 47b) for pushing the expanding means, which is in the state that the expanding means (45) is lifting up the undercut portion (31a, 31b) of the molded article (31), in a die-releasing direction the same as a direction of the movement of the moving means together with the moving means (46); and
suction means (48) for sucking the molded article (31) pushed by the direct-pushing rod (47a, 47b) and released from the die.

6. The molded article ejecting apparatus according to claim 5, wherein
the direct-pushing rod (47a, 47b) operate integrally with part of the die.

7. The molded article ejecting apparatus according to claim 5 or 6, wherein
the direct-pushing rods (47a, 47b) push the expanding means (45), which is in the state that the expanding means (45) is lifting up the undercut portion (31a, 31b) of the molded article (31), in the die-releasing direction by a force stronger than the force of the movement of the moving means (46).

8. A molded article ejecting method comprising:
lifting up an undercut portion (31a, 31b) of a molded article (31); and
ejecting the molded article (31) from a die, wherein
after the undercut portion (31a, 31b) of the molded article (31) is lifted up, part of the die supports part of the molded article (31) when the molded article (31) moves in a die-releasing direction.
